# EUROPEAN PATENT APPLICATION

(11) **EP 4 712 147 A1**
(43) Date of publication of application: **18.03.2026**
(21) Application number: 24852206.2
(22) Date of filing: 02.08.2024
(51) Int. Cl.: H01M 4/04, H01M 10/04, B65H 23/18, G06F 16/901, G06F 16/9032, G06F 16/9038, G06F 16/904, G06F 9/4401

(54) **PROCESS CONTROLLER, ROLL MAP GENERATION SYSTEM INCLUDING SAME, AND METHOD FOR GENERATING ROLL MAP BY USING SAME**

(30) Priority: 07.08.2023 KR 20230102917
(71) Applicant: LG Energy Solution, Ltd., Seoul 07335 (KR)
(72) Inventor: SIM, Min Kyu, Daejeon 34122 (KR); KIM, Min Su, Daejeon 34122 (KR); PARK, Jong Seok, Daejeon 34122 (KR); KIM, June Hee, Daejeon 34122 (KR); SHIN, Jong Kwon, Daejeon 34122 (KR); KOH, Jee Yeon, Daejeon 34122 (KR); PARK, Jae Wan, Daejeon 34122 (KR)
(74) Representative: BCKIP Part mbB
(86) International application number: PCT/KR2024/011360
(87) International publication number: WO 2025/033852

(57) **Abstract**

Example embodiments of the present technology provide a roll map generating method. The roll map generating method includes collecting first data, which represents a first event of an electrode sheet where a roll-to-roll process is performed, in a first memory region, and copying the first data to a second memory region.

## Description

### [Technical Field]

The present invention relates to a process controller, a roll map generating system including the process controller, and a roll map generating method using the process controller. The present application claims the benefit of priority based on Korean Patent Application No. 10-2023-0102917, filed on August 7, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a process controller with improved reliability, a roll map generation system including the process controller, and a roll map generating method using the process controller.

### [Technical Solution]

Example embodiments of the present invention provide a roll map generating method. The roll map generating method includes collecting first data, which represents a first event of an electrode sheet where the roll-to-roll process is performed, in a first memory region, and copying the first data to a second memory region.

The first event may be the start of the roll-to-roll process.

The roll map generating method may further include reading the first data from the second memory region and writing the first data to a server.

The first data may be collected based on a work order transmitted from the server to a controller.

The controller may be configured to control the roll-to-roll process based on the work order.

The roll map generating method may further include collecting second data in a third memory region, the second data representing a second event of the roll-to-roll process, and copying the second data to a fourth memory region.

The second event may be completion of the roll-to-roll process.

The second data may be collected based on a winding amount of the electrode sheet.

The roll map generating method may further include reading the second data from the fourth memory region and writing the second data to a server.

The roll map generating method may further include generating a roll map representing the roll-to-roll process based on the first data and the second data.

Example embodiments provide a controller. The controller includes a memory device including a first memory region and a second memory region, and a central processing unit (CPU) configured to access the first memory region and the second memory region, in which the CPU is configured to collect start data, which represents start of the roll-to-roll process on the electrode sheet, in the first memory region, and copy the start data from the first memory region to the second memory region. The memory device may further include a third memory region and a fourth memory region, and the CPU may be configured to collect completion data, which indicates completion of the roll-to-roll process on the electrode sheet, in the third memory region, and copy the start data from the third memory region to the fourth memory region.

Example embodiments provide a roll map generating system. The roll map generating system includes a controller configured to control a roll-to-roll process on an electrode sheet, and a server configured to access the controller, in which the controller includes a memory device including a first memory region and a second memory region, and a central processing unit (CPU) configured to access the first memory region and the second memory region. The CPU is configured to collect start data, which represents start of the roll-to-roll process on the electrode sheet, in the first memory region, and copy the start data from the first memory region to the second memory region.

The memory device may further include a third memory region and a fourth memory region, and the CPU may be configured to collect completion data, which represents completion of the roll-to-roll process on the electrode sheet, in the third memory region, and copy the start data from the third memory region to the fourth memory region.

The roll map generating system may further include a server configured to generate a roll map representing the roll-to-roll process on the electrode sheet, based on the first and second data.

The server may be configured to read the start data from the second memory region and the completion data from the fourth memory region, and write the start data and the completion data to the server.

### [Advantageous Effects]

According to example embodiments of the present invention, a process programmable logic controller (PLC) includes a memory region for memorizing for long-term memory. Accordingly, data critical to the generation of a roll map, such as start data and completion data, can be prevented from being lost.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a roll map generating system according to example embodiments.
FIG. 2 is a block diagram of a controller.
FIG. 3 is a flowchart of a roll map generating method according to example embodiments.
FIGS. 4 to 8 are block diagrams for describing a roll map generating method according to example embodiments.
FIG. 9 is a block diagram of a controller according to another example.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First and Second Embodiments)

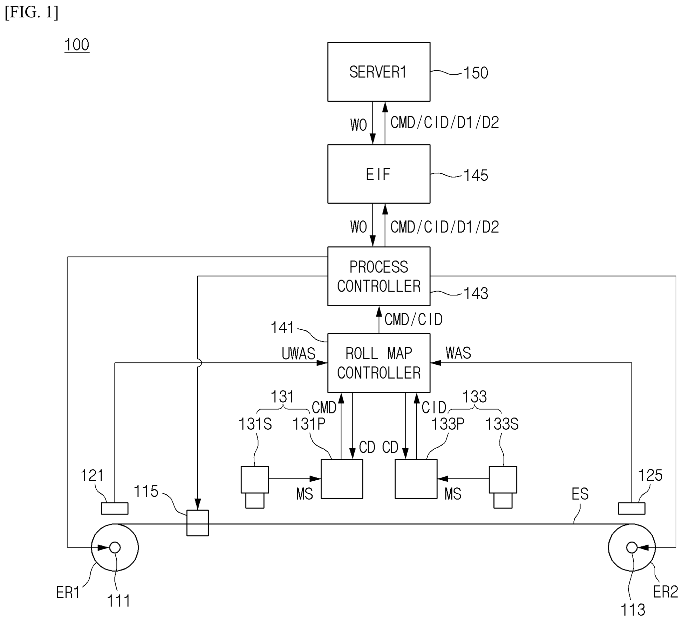

FIG. 1 illustrates a roll map generating system 100 according to example embodiments.

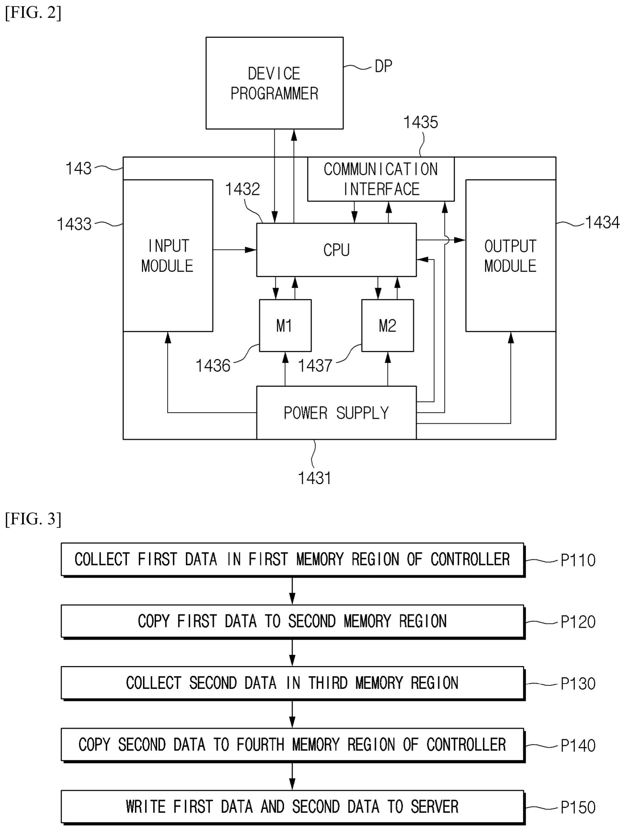

FIG. 2 is a block diagram of a controller 143.

Referring to FIGS. 1 and 2, the roll map generating system 100 may include an unwinder 111, a rewinder 113, a processing mechanism 115, a first rotary encoder 121, a second rotary encoder 123, a measuring device 131, an inspector 133, a controller 141, a controller 143, a server 145, and a server 150.

The unwinder 111 may be configured to unwind an electrode sheet ES from a first electrode roll ER1. The rewinder 113 may be configured to wind the electrode sheet ES into a second electrode roll ER2. Accordingly, the electrode sheet ES may be moved between the unwinder 111 and the rewinder 113.

A process of manufacturing a secondary battery (e.g., an electrode process) may be performed on the electrode sheet ES. The electrode process is performed on the electrode sheet ES unwound from the first electrode roll ER1 and wound into the second electrode roll ER2 and thus may be referred to as a roll-to-roll process.

The server 150 may be configured to generate a roll map. The roll map may represent events of the roll-to-roll process performed on the electrode sheet ES based on coordinates indicating a position on the electrode sheet ES. That is, the roll map may include event data of a process performed on the electrode sheet ES.

Generally, the event data is generated according to the progress of the process and thus is time series data. Accordingly, data of process events may include a value indicating the events and a time value matched thereto. The time series data may be temporally ordered. Temporal ordering is a main feature of time series data and should be understand as organizing events in an order in which they occur and arrive to be processed. That is, the time series data may be stored based on a point in time when an event occurs (i.e., when inspection and measurement are performed or when an action of a process is performed), and the event may be matched to time values.

The event data of the roll map may be related to coordinates. In the roll map, time series data constructed over time (i.e., according to the progress of the process) may be related to coordinate data CD based on the amount of movement (i.e., the amount of winding or the amount of unwinding) of the electrode sheet ES. Accordingly, the roll map enables feedback, feedforwarding, and tracking of the secondary battery manufacturing process as described below.

The manufacture of a secondary battery involves a series of different processes, and a leading process affects the following process. In this case, it is difficult to reflect time series data of the leading process in the following process when the time series data of the leading process does not directly match a real-world workpiece, an intermediate product, and a product. Hereinafter, correcting the following process based on data generated according to a result of the leading process will be referred to as feedforward.

Here, the workpiece is an article provided as a result of each process, e.g., an electrode sheet on which the coating process, the roll press process, and the slitting process are performed. The intermediate product may include separators that are cut by the notching process, electrodes, or an assembly thereof (i.e., an electrode assembly). The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data should be related to positions on workpieces, components, intermediate products, and products of the real world. Here, the feedforward may include controlling processing of an electrode sheet, based on a roll map generated in a preceding process. The roll map may allow the time series data to be connected with coordinate data including coordinates of the positions on the workpieces, the components, the intermediate products, and the products of the real world. The roll map may provide matching between the time series data and the workpieces, the components, the intermediate products, and the products of the real world, based on the coordinate data. Accordingly, through the generation of the roll map and feedforward based on the roll map, aspects of a process that depend on an operator's discretion can be digitized and objectified to improve the productivity and quality of the secondary battery manufacturing process.

A roll map of a preceding lot may be used to improve a process for a following lot, and this operation may be referred to as process feedback. The process feedback using the roll map may include dentifying process conditions and process parameters that cause problems and defects, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in the battery cell on the market, history data of the manufacture of the battery cell may be retrieved based on the cell ID.

The electrode sheet ES may be processed by the processing mechanism 115. The processing mechanism 115 may include a die coater, pressing rolls, or a slitting knife. The die coater may be configured to perform the coating process on the electrode sheet ES. In the coating process, an electrode sheet may be coated with an electrode slurry. The electrode slurry may include an active material, a conductive agent, a binder, and a solvent. The electrode slurry may be prepared by dissolving the active material, the conductive agent, the binder, etc. in the solvent. The pressing rolls may be configured to perform the roll pressing process on the electrode sheet ES. In the roll press process, the electrode sheet coated with an electrode slurry may be passed through between the pressing rolls. Through the roll pressing process, a surface of the electrode sheet may be planarized and a binding force between the active material on the electrode sheet and a current collector may be improved. The slitting process may be performed on the electrode sheet ES by the slitting knife. The electrode sheet ES may be divided into a plurality of individualized electrode sheets by the slitting process.

Roll maps may be generated in units of lots. A lot is a production unit of the roll-to-roll process. After a target winding length of the electrode sheet ES is achieved by the rewinder 113, the electrode sheet ES may be cut to separate the second electrode roll ER2. The completed second electrode roll ER2 is an example of a lot. The first electrode roll ER1 newly loaded on the unwinder 111 is also an example of a lot. The server 150 may generate and store a roll map of each of processes (e.g., the coating process, the roll pressing process, or the slitting process).

The first rotary encoder 121 may be configured to detect an amount of the electrode sheet ES unwound from the first electrode roll ER1 by the unwinder 111. Accordingly, the first rotary encoder 121 may be configured to generate an unwinding amount signal UWAS indicating an unwinding amount of the electrode sheet ES. The first rotary encoder 121 may be configured to transmit the unwinding amount signal UWAS to the controller 141. The controller 141 may be configured to collect unwinding amount data based on the unwinding amount signal UWAS of the electrode sheet ES.

The second rotary encoder 123 may be configured to detect an amount of the electrode sheet ES wound into the second electrode roll ER2 by the rewinder 113. Accordingly, the second rotary encoder 123 may be configured to generate a winding amount signal WAS indicating a winding amount of the electrode sheet ES. The second rotary encoder 123 may be configured to transmit the winding amount signal WAS to the controller 141. The controller 141 may be configured to collect winding amount data based on the winding amount signal WAS of the electrode sheet ES.

In some cases, a part of the electrode sheet ES may be scrapped and thus the amount of the electrode sheet ES unwound by the unwinder 111 may be different from the amount of the electrode sheet ES wound by the rewinder 113. When the electrode sheet ES is stretched due to pressure in the roll pressing process, the amount of the electrode sheet ES unwound by the unwinder 111 may be different from the amount of the electrode sheet ES wound by the rewinder 113.

The controller 141 may be configured to collect coordinate data CD of the electrode sheet ES based on an exhaustion amount signal WAS and/or an input amount signal UWAS of the electrode sheet ES. For example, the controller 141 may determine a moving distance of the electrode sheet ES based on the exhaustion amount signal WAS of the electrode sheet ES. Accordingly, the controller 141 may be configured to determine a position of a part of the electrode sheet ES wounded by the rewinder 113 on the electrode sheet ES at each point in time when an event occurs on the electrode sheet ES.

As another example, the controller 141 may determine the moving distance of the electrode sheet ES based on the input amount signal UWAS of the electrode sheet ES or based on each of the exhaustion amount signal WAS and the input amount signal UWAS. Hereinafter, as a non-limiting example, the technical idea of the present invention will be described with respect to an embodiment in which the controller 141 collects the coordinate data CD based on the exhaustion amount signal WAS of the electrode sheet ES.

The coordinate data CD may include coordinates matching each part of the electrode sheet ES. That is, each of arbitrary points on the electrode sheet ES may match a coordinate. The coordinate may be one-dimensional (1D) quantity in a machine direction (or a longitudinal direction) of the electrode sheet ES but is not limited thereto. The coordinate may be two-dimensional (2D) quantity in the machine direction and a transverse direction (or a width direction) of the electrode sheet ES.

The measuring device 131 may be configured to measure the electrode sheet ES to collect measurement data of the electrode sheet ES. The measuring device 131 may measure the electrode sheet ES by a scanning metho. The measuring device 131 may move in the transverse direction. During one scanning, the measuring device 131 may move from one end of the electrode sheet ES in the transverse direction to another end of the electrode sheet ES in the transverse direction. While the measuring device 131 performs scanning in the transverse direction, the electrode sheet ES may be moved in the machine direction by the unwinder 111 and the rewinder 113.

The measurement data may include a result of inspection expressed numerically. For example, the measurement data may include size data, e.g., a thickness and a width, of the electrode sheet ES, data of a loading amount of a coating material on the electrode sheet ES, size data, e.g., a width of an insulating material on the coating material and an overlapping width between the coating material and the insulating material, mismatching data between coated lanes on an upper surface of the electrode sheet ES and coated lanes on a lower surface of the electrode sheet E, and the like. Here, the loading amount is the amount of the coating material loaded per unit area of the electrode sheet ES, and may be an area density of the coating material. Whether a measured part of the electrode sheet ES is defective or not may be determined by processing the measurement data by a set metho.

When an amount of the measured coating material on the electrode sheet ES (e.g., the loading amount on the electrode sheet ES or the thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading amount on the electrode sheet ES or the thickness of the electrode sheet ES) is less than the lower limit or greater than the upper limit.

The measuring device 131 may include a sensing part 131S and a processor 133P. The sensing part 131S may be configured to detect a physical quantity of the electrode sheet ES to generate a measurement signal MS. For example, the sensing part 131S may include a time delay and integration (TDI) camera, a complementary metal oxide semiconductor (CMOS) image sensor, a time-of-flight (TOF) sensor, etc. The sensing part 131S may include an emitter and a receiver that are configured to perform measurement using a non-destructive signal such as ultrasound waves, microwaves, terahertz waves, or infrared rays. The sensing part 131S may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 131 may include a pressure sensor, a temperature sensor, an ultrasonic sensor, a proximity sensor, a door state sensor, a motion tracking sensor, a humidity sensor, a visible light and infrared sensor, a camera, etc.

The processor 133P may be configured to connect the coordinate data CD with the measurement data to generate coordinate-related measurement data CMD. In general, the measurement data may be processed based on a trigger point. Examples of the processing of the measurement data may include storing the measurement data, manipulating the measurement data (e.g., generating the coordinate-related measurement data CMD), and transmitting the measurement data. The processor 133P may be configured to transmit the coordinate-related measurement data CMD to the controller 141.

As a non-limiting example, a trigger point for processing the measurement data may be the completion of scanning. For example, the sensing part 131S may scan the electrode sheet ES in the width direction of the electrode sheet ES, and the measurement data may be stored, processed, manipulated, and transmitted whenever scanning is performed. As another example, the trigger point may be completion of performing scanning multiple times or partial completion of scanning.

According to example embodiments, the processor 131P may be configured to calibrate the coordinate data CD, based on a position of the sensing part 131S. More specifically, the processor 131P may be configured to calibrate the coordinate data CD based on an offset length of the sensing part 131S, so that coordinates of the coordinate data CD may be connected with the measured values of the measurement data.

The measuring device 131 may collect measurement data of a part corresponding to (e.g., overlapping) the sensing part 131S and the coordinate data CD is collected by the second encoder 125 spaced apart from the sensing part 131S as described above, and thus, a part of the electrode sheet ES corresponding to the coordinate data CD and a part of the electrode sheet ES corresponding to the measurement data may be different from each other at the same point in time.

The processor 131P may be configured to generate the coordinate-related measurement data CMD based on the coordinate data CD and the measurement data. According to example embodiments, the coordinate-related measurement data CMD may be provided by calibrating the coordinate data CD, which is collected at the same point in time as the measurement data, based on the offset length and connecting the calibrated coordinate data CD with the measurement data. Measured values (or a representative value of the measured values and a judgement value) of the coordinate-related measurement data CMD may be matched to calibrated coordinates. The measured values (or the representative value of the measured values and the judgement value) of the coordinate-related measurement data CMD may further be matched to time values.

Here, the representative value of the measured values may include an average, a standard deviation, a median value, a maximum value, or a minimum value, and the judgement value may be an evaluation for a process on the electrode sheet ES determined from the representative value. As a non-limiting example, the coordinate-related measurement data CMD may include the representative value, the judgement value, and a start coordinate and an end coordinate of a part of the electrode sheet ES from which the measurement data is collected.

A plurality of guide rolls may be interposed between the sensing part 131S and the rewinder 113 to define a moving path of the electrode sheet ES. Accordingly, the offset length may be defined as a length of the electrode sheet ES between the sensing part 131S and the rewinder 113. The offset length may be equal to or greater than a linear distance between the sensing part 131S and the rewinder 113.

The inspector 133 may be configured to inspect the electrode sheet ES. Inspection data may include a judgement on the quality of a part of the electrode sheet ES and a process event. For example, the inspection data may include data about the appearance of the electrode sheet ES collected by an image-based inspection device such as a vision machine, data about disconnections and joints of the electrode sheet ES, data about a part of the electrode sheet ES on which sampling inspection is performed, data about a part of the electrode sheet ES to be scrapped, data about a scraped part of the electrode sheet ES, data about whether the coating material and the insulating material on the electrode sheet ES are defective or not, data about datum points indicating a position on the electrode sheet ES, and defect data such as a pinhole defect, a crater defect, a line defect, a crack defect, a side ring defect, an island defect, a folded defect, a wrinkle defect, a pit defect, and a scratch defect.

The inspector 133 may include a sensing part 133S and a processor 133P. The sensing part 133S may be configured to detect the electrode sheet ES to generate an inspection signal IS. The sensing part 133S may be an imaging device including a delay and integration camera, a complementary metal oxide semiconductor (CMOS) image sensor, and the like. The sensing part 133S may include a barcode reader, an optical character reader (OCR), a color sensor, or the like.

The processor 133P may be configured to collect inspection data by processing the inspection signal IS based on a set algorithm. The inspection data may include a judgement value for quality judgement and a time value matching the judgement value.

The processor 133P may be configured to connect the coordinate data CD with the inspection data to generate coordinate-related inspection data CID. According to example embodiments, the processor 133P may be configured to calibrate the coordinate data CD, based on a position of the sensing part 133S. More specifically, the processor 133P may be configured to calibrate the coordinate data CD based on an offset length of the sensing part 133S, so that the coordinates of the coordinate data CD may be connected with judgement values of the inspection data. The offset length of the sensing part 133S may be a length of the electrode sheet ES between the sensing part 133S and the rewinder 113. The processor 133P may be configured to transmit the coordinate-related inspection data CID to the controller 141.

The controller 141 may be configured to transmit the coordinate-related measurement data CMD and the coordinate-related inspection data CID to the controller 143. The controller 143 may be, for example, a programmable logic controller (PLC). A PLC is a special type of microprocessor-based controller that stores instructions using a programmable memory and implements functions such as logic, sequencing, timing, counting and arithmetic operations to control machines and processes. It is easy to operate and program the PLC. The controller 141 may also be a PLC but is not limited thereto.

The controller 143 may be configured to control operations of the unwinder 111, the rewinder 113, and the processing mechanism 115. The controller 143 may be configured to receive a work order from the server 150. For control of a process, a communication line may be installed between the controller 143 and the server 150 to connect the controller 143 and the server 150 via the server 145 . Accordingly, data transmission through the controller 143 may reduce resources required for the installation of the communication line and enable efficient processing and management of data, compared to a case in which the first and second rotary encoders 121 and 125, the measuring device 131, and the inspector 133 directly communicate with the server 150 and a case in which the controller 141 directly communicates with the server 150.

The server 145 may be a communication server. The server 145 may include a program for communication between the controller 143 of manufacturing equipment and the server 150 that is an upper server. The server 145 may be implemented by hardware as described below. A language and protocol of the server 150 may be different from a language and protocol of the controller 143. For example, the language of the server 150 may be SQL, and the language of the controller 143 may be a ladder diagram.

The server 145 may be configured to convert a work order WO transmitted from the server 220 into the language of the controller 143. In addition, the server 145 may be configured to convert the coordinate-related measurement data CMD, the coordinate-related inspection data CID, and first and second data D1 and D2, which will be described below, into the language of the server 150, and write the converted coordinate-related measurement data CMD, coordinate-related inspection data CID, and first and second data D1 and D2 to a database of the server 150.

The work order WO may include model information and a recipes for processing the electrode sheet ES. The work order WO may include all matters related to the processing of the electrode sheet ES, e.g., the number of lots to be processed in a current process, the number of coated part lines to be formed on the electrode sheet ES, process conditions such as temperature, humidity, and pressure, and process parameters such as a moving speed of the electrode sheet ES, a discharge rate of a coating die, and pressure of pressing rolls.

The controller 143 may be configured to generate a signal for operating or stopping the unwinder 111, the rewinder 113, and the processing mechanism 115 based on the work order WO. The controller 143 may be configured to collect the first data D1 based on the work order WO. The first data D1 may represent a first event of a roll-to-roll process of the electrode sheet ES. As a non-limiting example, the first event may be the start of the roll-to-roll process of the electrode sheet ES. The controller 143 may be configured to collect the second data D2 based on the winding amount signal WAS of the electrode sheet ES. The second data D2 may represent a second event of the roll-to-roll process of the electrode sheet ES. As a non-limiting example, the second event may be the completion of the roll-to-roll process of the electrode sheet ES.

The controller 143 may include a power supply 1431, a central process unit (CPU) 1432, an input interface 1433, an output interface 1434, a communication interface 1435, and memory devices 1436 and 1437.

The power supply 1431 may be configured to supply operating power to the CPU 1432, the input module 1433, the output module 1414, the communication interface 1435, and the memory devices 1436 and 1437. In some cases, the controller 143 may be supplied with power from a separate power supply and thus may be omitted in this case. As a non-limiting example, the power supply 1431 may be configured to supply operating power based on an AC voltage of 220 V or a DC voltage of 24 V.

The memory device 1436 may be configured to store a system program. The memory device 1436 may be, for example, a read-only memory (ROM) and be configured to permanently store data for an operating system of the controller 143.

The memory device 1437 may be configured to store a user program and data. The user program may be a program set by a user so that the CPU 1432 may perform a specific function. The data may include the coordinate-related inspection data CID, the coordinate-related measurement data CMD, and the first and second data D1 and D2 described below. The memory device 1437 may further store state information of input and output devices, values of a timer, a counter, and other inner devices. The memory device 1437 may be, for example, a random access memory (RAM). In general, the user program is often updated and thus may be stored in the memory device 1437. When the user program is completed, the user program may be stored in the memory device 1436. The user program may be written to the memory device 1436 by a device programmer DP. The device programmer DP may be a device separate from the controller 143 or may be included in the controller 143.

The CPU 1432 may be configured to implement logic and control communication between modules that convert an input signal into an output operation signal. The CPU 1432 may operate based on the system program stored in the memory device 1436. The CPU 1432 may be configured to store the coordinate-related measurement data CMD, the coordinate-related inspection data CID, and the first and second input data D1 and D2 in the memory device 1437. The CPU may be configured to manipulate data based on the user program stored in the memory device 1437. The CPU 1432 may be configured to write input data from the measuring device 131, the inspector 133, and a user to the memory device 1437.

When a PLC operates, the CPU 1432 may scan current input conditions and the data and store them in the memory device 1437. Thereafter, the CPU 1432 may be configured to read and execute the user program step by step and transmit a result to the output module 1434, the communication module 1435, or the memory device 1437.

Because the input module 1433 and the output module 1434 perform isolation and signal conditioning, sensors and actuators may be directly connected to the input module 1433 and the output module 1434 without other circuits. The input module 1433 and the output module 1434 may be configured to transmit data between the CPU 1432 and an external device.

Conditions and data of industrial devices and production processes may be transmitted to the CPU 1432 through the input module 1433. A result of processing performed by the CPU 1432 may be transmitted to an actuator through the output module 1434.

The input module 1433 may include, for example, a mechanical switch for position detection, a proximity switch, a photoelectric switch, an encoder, a temperature and pressure switch, a potentiometer, a linear variable differential transformer, a strain gauge, a thermistor, a thermal transistor, and digital and analog devices such as an AC/DC thermocouple switch. The input module 1433 may provide an interface between an input device and the CPU 1432 operating based on a low DC voltage. Some input devices may generate an analog signal that is in a high-voltage range. The input module 1433 may be configured to convert a signal generated by the input device into a voltage that is in a range acceptable by the CPU 1432.

The output module 1434 may be configured to generate a signal for control of an operation of an actuator. The output module 1434 may include a relay, a transistor, and a triac. The output module 1434 may include a relay, a contactor, a solenoid valve, a motor, and the like.

The communication interface 1435 may be configured to transmit and receive data to and from the controller 141 or to transmit and receive data to and from the server 150 through the server 145.

The server 150 may be configured to generate a roll map based on the coordinate-related inspection data CID, the coordinate-related measurement data CMD, and the first and second data D1 and D2. The roll map may include data about specifications of a lot. The specifications of the lot may include, for example, a lot number, a length of the wound electrode sheet ES, a width of the electrode sheet ES, and materials and a composition used to process the electrode sheet ES
According to example embodiments, the server 150 may be a data processing system that supports all activities required to manage the manufacture of a secondary battery, such as work schedule management, work instructions, quality control, and work performance aggregation. The server 150 may be, for example, a manufacturing execution system (MES). The server 150 may be configured to perform inputting, processing, outputting, and communication of data necessary for the manufacture of electrodes, including the coating process, a press process, and a slitting process.

According to other example embodiments, the server 150 may be configured to store and process raw measurement data. The server 150 may manage the quality of processing the electrode sheet by continuously monitoring the processing of the electrode sheet based on the measurement data. According to example embodiments, the server 150 may be a statical process controller (SPC). The server 150 may collect and analyze manufacturing data in almost real time to identify problematic conditions in a timely manner and provide a notification to an operator before potential problems occur.

According to other example embodiments, the server 150 may be, for example, a data warehouse, and store a roll map for a long period of time according to a product quality guarantee period and the like.

According to other example embodiments, the server 150 may perform all functions of an MES, an SPC, and a data warehouse or be provided separately from the MES, the SPC, and the data warehouse to create a role map.

The processors 131P and 133P, the controllers 141 and 143, and the server 145 and server 150 may be implemented by hardware, firmware, software, or a combination thereof. For example, the processors 131P and 133P, the controllers 141 and 143, and the servers 145, and server 150 may include computing devices such as workstation computers, desktop computers, laptop computers, and tablet computers. The processors 131P and 133P, the controllers 141 and 143, and the servers 145, and server 150 may include a simple controller, a complex processor such as a microprocessor, a CPU, or a GPU, a processor configured by software, dedicated hardware, or firmware. The processors 131P and 133P, the controllers 141 and 143, and the servers 145, and server 150 may be implemented, for example, by a general-purpose computer or application-specific hardware such as a digital signal processor (DSP), a field programmable gate array (FPGA), or an application specific integrated circuit (ASIC).

The server 150 may include a physical server or a cloud server. The server 150 may provide data and an analysis result to an operator through various frameworks. A framework may include a protocol that supports data transmission so that a display device may visualize data through a user interface and provide updated visualization when new data is calculated by the server 150. The protocol supporting data transmission may include HTML, JavaScript, and/or JSON.

The server 150 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

The roll map generating system 100 may provide a plug-in architecture with an API for obtaining data to provide a plug-and-play connection among a sensor, a measuring device, and an inspector. Accordingly, resources in a certain process step and a specific site can be easily transferred to a different process and a different site or new resources can be easily introduced into each process step and each site.

In some embodiments, the roll map generating system 100 may further include a manual input system that allows an operator to input manufacturing data. The roll map generating system 100 may allow an operator to input data using an input tool and a computer-based input of manufacturing data such as Excel file scraping. The manual input system may be, for example, human-machine interfaces (HMI) of supervisory control and data acquisition (SCADA). Generally, SCADA may include a combination of software and hardware, such as a PLC and remote terminal units (RTUs). HMI is a screen that supports communication between an operator and an SCADA system and is a key element of the SCADA system. For example, manual input by HMI may include selecting a defective type and reflecting performance at the time of completion.

According to some embodiments, the operations of the processors 131P and 133P, the controllers 141 and 143, and the servers 145, and server 150 may be implemented as instructions stored in a machine-readable medium that is readable and executable by one or more processors. Here, the machine-readable medium may include an arbitrary mechanism for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processors 131P and 133P, the controllers 141 and 143, and the servers 145, and server 150 may include firmware, software, routines, and instructions for performing the above-described operations or processes to be described below. For example, the processors 131P and 133P, the controllers 141 and 143, and the servers 145, and server 150 may be instantiated in a memory.

### (Third Embodiment)

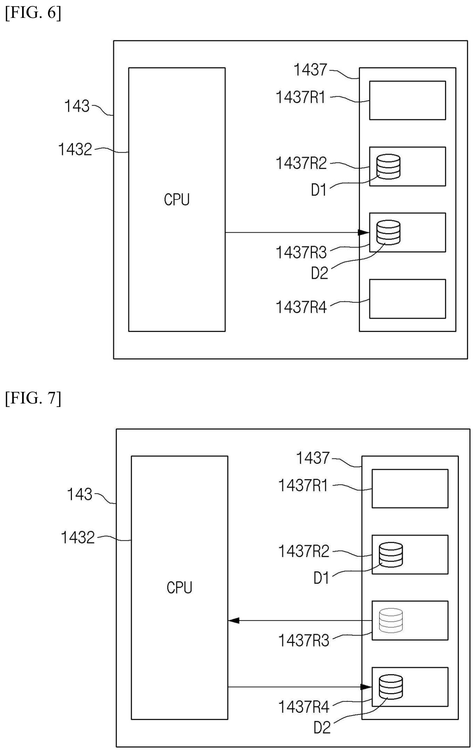

FIG. 7 is a flowchart of a roll map generating method according to example embodiments.

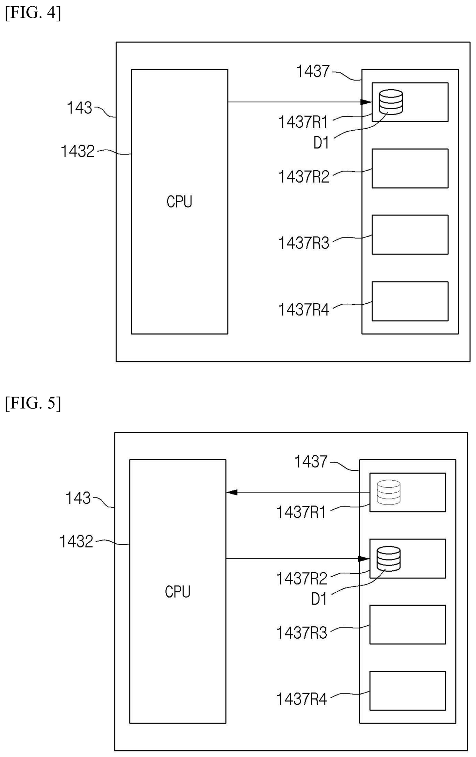

FIGS. 4 to 8 are block diagrams for describing a roll map generating method according to example embodiments.

Referring to FIGS. 1 to 4, in P110, first data D1 may be collected in a first memory region 1437R1 of the controller 143. The first data D1 may be written by the CPU 1432.

The memory device 1437 may include first to fourth memory regions 1437R1, 1437R2, 1437R3, and 1437R4 that operate separately. The CPU 1432 may be configured to access the first to fourth memory regions 1437R1, 1437R2, 1437R3, and 1437R4. A type of data (e.g., process start data) allocated to the first memory region 1437R1 may be collected only in the first memory region 1437R1. Data of the first memory region 1437R1 may be copied to the second memory region 1437R2. A type of data (e.g., completion data) allocated to the third memory region 1437R3 may be collected only in the third memory region 1437R3. Data of the third memory region 1437R3 may be copied to the fourth memory region 1437R4. As described above, the first to fourth memory regions 1437R1, 1437R2, 1437R3, and 1437R4 may be configured to perform different functions.

Data stored in each of the first to fourth memory regions 1437R1, 1437R2, 1437R3, and 1437R4 may be deleted at a set time interval. The time intervals at which data is deleted from the first to fourth memory regions 1437R1, 1437R2, 1437R3, and 1437R4 may be different from each other. The time interval at which data is deleted from the second memory region 1437R2 may be longer than the time interval at which data is deleted from the first memory region 1437R1. Accordingly, data copied to the second memory region 1437R2 may be stored for a long time. The time interval at which data is deleted from the fourth memory region 1437R4 may be longer than the time interval at which data is deleted from the third memory region 1437R3. Accordingly, data copied to the fourth memory region 1437R4 may be stored for a long time.

The first data D1 may be written to the first memory region 1437R1 by the CPU 1432. The first data D1 may be data that should be retained by the memory device 1437 for a relatively long time. As described above, the first data D1 may be start data of the roll-to-roll process of the electrode sheet ES but is not limited thereto. The first data D1 may one of the inspection data and the measurement data described above.

Referring to FIGS. 1 to 3 and 5, in P120, the first data D1 may be copied to the second memory region 1437R2 of the controller 143. The CPU 1432 may be configured to read the first data D1 from the first memory region 1437R1 and write the first data D1 to the second memory region 1437R2. After the first data D1 is written in the second memory region 1437R2, the first data D1 may be deleted from the first memory region 1437R1.

Referring to FIGS. 1 to 3 and 6, in P130, the second data D2 may be collected in the third memory region 1437R3 of the controller 143. The second data D2 may be written by the CPU 1432.

Referring to FIGS. 1 to 3 and 7, in P140, the second data D2 may be copied to the fourth memory region 1437R4 of the controller 143. The second data D2 may be data that should be retained by the memory device 1437 for a relatively long time. The second data D2 may be, for example, completion data of the roll-to-roll process of the electrode sheet ES but is not limited thereto. The CPU 1432 may be configured to read the second data D2 from the third memory region 1437R3 and write the second data D2 to the fourth memory region 1437R4. After the second data D2 is written in the fourth memory region 1437R4, the first data D2 may be deleted from the third memory region 1437R3.

Referring to FIGS. 1 to 3 and 8, in P150, the first data D1 and the second data D2 may be written to the server 150. The server 145 may be configured to access the second and fourth memory regions 1437R2 and 1437R4 of the memory device 1437. The server 145 may be configured to read the first data D1 from the second memory region 1437R2, read the second data D2 from the second memory region 1437R4, and write the first data D1 and the second data D2 to the server 150. The server 145 may not access collection regions (i.e., the first and third memory regions 1437R2 and 1437R4) of the memory device 1437.

The server may thereafter be configured to generate a roll map based on the coordinate-related inspection data CID, the coordinate-related measurement data CMD, and the first and second data D1 and D2. The first and second data D1 and D2 include information about the start and completion of the electrode sheet ES and thus a range of data belonging to a roll map of a corresponding lot may be determined based on the first and second data D1 and D2 to generate the roll map.

### (Fourth Embodiment)

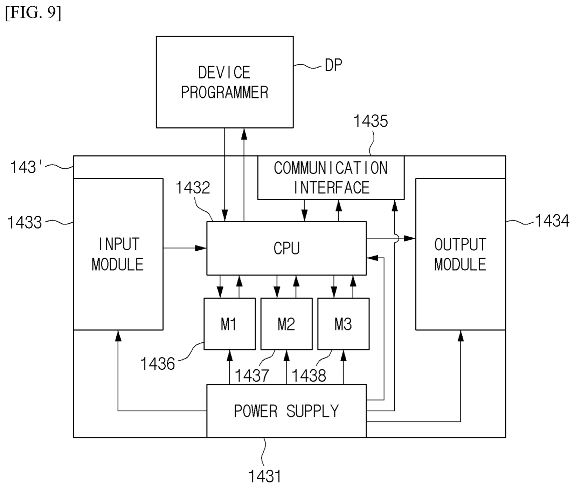

FIG. 9 is a block diagram of a controller 143' according to another example.

Referring to FIG. 9, the controller 143' may include a power supply 1431, a CPU 1432, an input interface 1433, an output interface 1434, a communication interface 1435, and memory devices 1436, 1437, and 1438.

The power supply 1431, the CPU 1432, the input interface 1433, the output interface 1434, the communication interface 1435, and the memory devices 1436, 1437, and 1438 are substantially the same as those described above with reference to FIGS. 1 and 2 and thus redundant description thereof is omitted here.

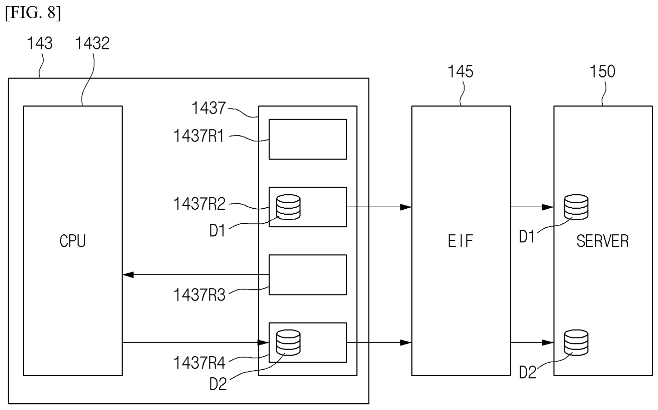

The memory device 1438 may be configured to store the first and second data D1 and D2 (see FIG. 8) copied thereto. The memory device 1438 may be a memory chip separate from the memory device 1437 or may be a memory module. That is, the memory device 1438 may be a device distinguished from the memory device 1437. According to example embodiments, the controller 143' may include the memory device 1438 to store data, e.g., the first and second data D1 and D2 (see FIG. 8), which should be stored for a relatively long time.

Accordingly, the memory device 1437 may include the first and third memory regions 1437R1 and 1437R3 (see FIG. 8) to be used to collect data, and the memory device 1438 may include memory regions to be used to copy and store data, similar to the second and fourth memory regions 1437R2 and 1437R4 (see FIG. 8).

The memory device 1438 may be a type of memory different from the memory device 1437. For example, the memory device 1437 may be a static RAM (SRAM) or a dynamic RAM (DRAM), and the memory device 1438 may a NAND flash memory, a ferroelectric RAM (FRAM ), a magnetic RAM (MRAM), a phase-change RMAM (PRAM), or a resistive RAM (ReRAM).

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A roll map generating method comprising:
collecting first data in a first memory region, the first data representing a first event of an electrode sheet where a roll-to-roll process is performed; and
copying the first data to a second memory region.

2. The roll map generating method of claim 1, wherein
the first event is start of the roll-to-roll process.

3. The roll map generating method of claim 1, further comprising
reading the first data from the second memory region and writing the first data to a server.

4. The roll map generating method of claim 3, wherein
the first data is collected based on a work order transmitted from the server to a controller, and
the controller is configured to control the roll-to-roll process based on the work order.

5. The roll map generating method of claim 1, further comprising:
collecting second data in a third memory region, the second data representing a second event of the roll-to-roll process; and
copying the second data to a fourth memory region.

6. The roll map generating method of claim 5, wherein
the second event is completion of the roll-to-roll process.

7. The roll map generating method of claim 5, wherein
the second data is collected based on a winding amount of the electrode sheet.

8. The roll map generating method of claim 5, further comprising
reading the second data from the fourth memory region and writing the second data to a server.

9. The roll map generating method of claim 7, further comprising
generating a roll map representing the roll-to-roll process based on the first data and the second data.

10. A process controller comprising:
a memory device including a first memory region and a second memory region; and
a central processing unit (CPU) configured to access the first memory region and the second memory region,
wherein the CPU is configured to collect start data, which represents start of the roll-to-roll process on the electrode sheet, in the first memory region, and copy the start data from the first memory region to the second memory region.

11. The process controller of claim 10, wherein
the memory device further includes a third memory region and a fourth memory region, and
the CPU is configured to collect completion data, which indicates completion of the roll-to-roll process on the electrode sheet, in the third memory region, and copy the start data from the third memory region to the fourth memory region.

12. A roll map generating system comprising:
a controller configured to control a roll-to-roll process on an electrode sheet; and
a server configured to access the controller,
wherein the controller includes:
a memory device including a first memory region and a second memory region; and
a central processing unit (CPU) configured to access the first memory region and the second memory region,
wherein the CPU is configured to collect start data, which represents start of the roll-to-roll process on the electrode sheet, in the first memory region, and copy the start data from the first memory region to the second memory region.

13. The roll map generating system of claim 12, wherein
the memory device further includes a third memory region and a fourth memory region, and
the CPU is configured to collect completion data, which represents completion of the roll-to-roll process on the electrode sheet, in the third memory region, and copy the completion data from the third memory region to the fourth memory region.

14. The roll map generating system of claim 13, further comprising
a server configured to generate a roll map representing the roll-to-roll process on the electrode sheet, based on the first and second data.

15. The roll map generating system of claim 14, wherein
the server is configured to read the start data from the second memory region and the completion data from the fourth memory region, and write the start data and the completion data to the server.
